# DEMANDE DE BREVET EUROPEEN

(11) **EP 1 612 473 A1**
(43) Date de publication de la demande: **04.01.2006**
(21) Numéro de dépôt: 05291395.1
(22) Date de dépôt: 29.06.2005
(51) Int. Cl.: F21S 8/10, F21V 17/00, F21V 19/00

(54) **Dispositif support d'au moins un module d'éclairage pour un véhicule automobile**

(30) Priorité: 02.07.2004 FR 0407414
(71) Demandeur: VALEO VISION, 93012 Bobigny Cédex (FR)
(72) Inventeur: Galvez, Francisco, 23600 Martos (Jaen) (ES)
(74) Mandataire: Renous Chan, Véronique

(57) **Abrégé**

L'invention a pour objet un dispositif support (11) d'au moins un module d'éclairage pour un véhicule automobile. Le dispositif support comprend une platine support (12). La platine support comprend au moins une première cavité. Un réflecteur peut être monté au droit de la première cavité grâce à des moyens de montage. Au moins une source lumineuse (18) peut être insérée dans la première cavité. La platine support comprend également une attache (14) intégrée pour des moyens de fixation (13) de la source lumineuse.

## Description

L'invention concerne un dispositif support d'au moins un module d'éclairage pour un véhicule automobile.

Le domaine de l'invention est, d'une façon générale, celui des projecteurs de véhicule automobile. Dans ce domaine, les projecteurs peuvent remplir différentes fonctions. On trouvera essentiellement :
- des projecteurs à feux de position, d'intensité et de portée faible ;
- des projecteurs à feux de croisement, ou codes, d'intensité plus forte et de portée sur la route avoisinant 70 mètres, qui sont utilisés essentiellement la nuit et dont la répartition du faisceau lumineux est telle qu'elle permet de ne pas éblouir le conducteur d'un véhicule croisé ;
- des projecteurs à feux de route longue portée, et des feux de complément de longue portée, dont la zone de vision sur la route avoisine 200 mètres, et qui doivent être éteints lorsque l'on croise un autre véhicule afin de ne pas éblouir son conducteur ;
- des projecteurs à feux anti-brouillard.

Il existe également d'autres projecteurs, comme par exemple des projecteurs à feux de jours, dits DRL (pour « Daytime Running Light »), qui restent allumés toute la journée, ou encore des projecteurs à feux indicateurs, de direction par exemple.

Un dispositif de signalisation et/ou d'éclairage de type projecteur peut comprendre plusieurs modules d'éclairage côte à côte dans un même boîtier, de telle sorte que le projecteur peut remplir plusieurs fonctions, c'est-à-dire être apte à émettre plusieurs faisceaux lumineux à photométries différentes, par exemple un faisceau de type route et un faisceau de type code. Un même module peut remplir une ou plusieurs fonctions.

Dans l'état de la technique, on connaît essentiellement deux types de modules d'éclairage possédant chacun une structure distincte.

Un premier type de module d'éclairage, dit module optique traditionnel, est composé essentiellement d'un réflecteur associé à une source lumineuse, par exemple une lampe de type halogène, une lampe de type xénon, une ou plusieurs diodes électroluminescentes. Le réflecteur comprend un miroir comportant par exemple un ensemble de stries ou de zones de formes diverses, réalisant ainsi une surface complexe dont la forme, qui a préalablement fait l'objet de calculs précis, permet de réfléchir des signaux lumineux émis par la source lumineuse pour produire un faisceau lumineux de photométrie donnée. Par exemple, pour un module à feux de croisement, le faisceau lumineux est essentiellement orienté horizontalement et vers le bas lorsque le module à feux de croisement est installé dans un véhicule automobile.

Un ressort permet de fixer la source lumineuse de manière amovible. La source lumineuse doit en effet pouvoir être remplacée sans qu'il soit besoin de remplacer le module optique traditionnel lui-même.

Le réflecteur est situé dans un voisinage immédiat de la source lumineuse et doit donc être capable de supporter des températures élevées, typiquement jusqu'à 200°C. Le réflecteur est par conséquent moulé dans un matériau relativement résistant à la chaleur, par exemple un matériau thermodurcissable.

Un matériau thermodurcissable est relativement abrasif : lorsque des moulages répétés sont effectués, des éléments fins du réflecteur ainsi moulé risquent par la suite de se détacher et de polluer l'intérieur du réflecteur ou du projecteur.

Par conséquent, le ressort n'est pas attaché directement sur le réflecteur, mais sur un porte-ressort, ou couronne, qui comprend une attache. La couronne est elle-même vissée sur le réflecteur. La couronne est typiquement réalisée dans un matériau métallique, de sorte que l'attache pour le ressort est relativement facile à réaliser.

Un second type de module d'éclairage, dit module optique elliptique, est également couramment utilisé. Un module optique elliptique comprend essentiellement une source lumineuse, un réflecteur et une lentille convexe.
La source lumineuse, le réflecteur et la lentille sont disposés de telle sorte que des rayons émis par la source lumineuse soient à peu près horizontaux lorsque le module optique elliptique est embarqué dans un véhicule automobile. Un support dit « intermédiaire », ne présentant pas de propriétés optiques particulières, permet de rattacher la lentille convexe au réflecteur.

Un dispositif de signalisation et/ou d'éclairage de type projecteur peut comprendre dans un même boîtier un module optique elliptique et un module optique traditionnel. Le module optique elliptique peut remplir une seule fonction, par exemple route, ou bien plusieurs fonctions. Dans ce dernier cas, le dispositif de signalisation et/ou d'éclairage correspondant remplira au moins trois fonctions, par exemple route, code, et DRL.

Une plaque, dite platine support, est utilisée pour supporter le module optique elliptique et le module optique traditionnel dans le dispositif de signalisation et/ou d'éclairage. En effet, l'orientation des modules d'éclairage doit pouvoir être réglée, soit de manière statique, soit de manière dynamique. Dans les deux cas, il est important que l'orientation des deux modules d'éclairage soit la même : aussi les deux modules d'éclairage sont-ils supportés par une même platine support. L'orientation des modules d'éclairage est réglée en orientant la platine support, typiquement à l'aide de trois points de réglage.

Un dispositif de signalisation et/ou d'éclairage de type projecteur selon l'art antérieur comprend une platine support, un module optique traditionnel et un module optique elliptique. Le module optique traditionnel comprend un réflecteur, le réflecteur du module optique traditionnel et la platine support étant moulés en une seule pièce. La platine support est par conséquent choisie en un matériau relativement résistant à la chaleur, typiquement en un matériau thermodurcissable. Ce matériau n'est généralement pas apte à supporter des contraintes mécaniques élevées.

Une source lumineuse peut être insérée dans le réflecteur du module optique traditionnel, et fixée de manière amovible par un ressort. Ce ressort est attaché à une attache d'une couronne, comme on l'a vu plus haut. La couronne est elle-même vissée sur le réflecteur du module optique traditionnel.

Ce projecteur présente divers inconvénients liés au fait que la platine support soit en matériau thermodurcissable, car ce matériau est relativement peu résistant mécaniquement. Le poids relativement élevé du module optique elliptique peut provoquer un déséquilibre à l'intérieur du projecteur et risque d'affaiblir l'ensemble formé par la platine support et le réflecteur.

La présente invention permet d'améliorer un tel projecteur, tout autant sur le plan mécanique que structurel.

La présente invention a pour objet un dispositif support d'au moins un module d'éclairage pour un véhicule automobile. Le dispositif support comprend au moins une platine support. La platine support comprend au moins une première cavité. Un réflecteur peut être monté au droit de la première cavité grâce à des moyens de montage. Au moins une source lumineuse peut être insérée dans la première cavité. La platine support comprend également une attache intégrée pour des moyens de fixation de la source lumineuse. Dans le contexte de l'invention « intégrée » signifie « fixée à «, ou « faisant partie de », sachant que la fixation peut être choisie amovible ou inamovible.

Le dispositif support selon la présente invention permet de réaliser la platine support dans un matériau autre qu'un matériau thermodurcissable, permettant par là d'éviter les inconvénients susmentionnés.

L'attache est, selon la présente invention, directement intégrée à la platine support : la source lumineuse est donc fixée sans utiliser de couronne. Un dispositif de vissage de la couronne à un réflecteur est également supprimé. Les étapes de fabrication, de stockage et de vissage sur le réflecteur de la couronne sont par conséquent éliminées. Le procédé de fabrication du dispositif de signalisation et/ou d'éclairage est donc relativement simple à mettre en oeuvre.

La platine support et l'attache sont avantageusement moulées d'une seule pièce. La platine support selon l'invention est ainsi relativement simple à réaliser, quand platine support et attache sont toutes les deux choisies à base de matériau polymère. On peut aussi choisir de surmouler l'attache sur la platine support, ce qui laisse la possibilité soit d'utiliser le même polymère pour les deux composants, soit d'utiliser des polymères différents (mais compatibles pour permettre un surmoulage), selon les exigences, notamment mécaniques, nécessaires à chacun des composants.

Alternativement, l'attache peut être intégrée à la platine support par une autre manière, par collage par exemple.

La platine support est préférentiellement en matériau thermoplastique. La platine support est ainsi relativement facile à mouler. De plus, le matériau thermoplastique permet de réaliser relativement facilement des moulages comprenant des détails de taille relativement faible, comme par exemple l'attache.

Des maintiens de la platine support à un boîtier du dispositif de signalisation et/ou d'éclairage, ayant également une taille relativement faible, sont plus aisément réalisés dans un matériau thermoplastique que dans un matériau thermodurcissable, comme selon le dispositif de signalisation et/ou d'éclairage de l'art antérieur. Le dispositif de signalisation et/ou d'éclairage comprenant un dispositif support selon la présente invention assure par conséquent une meilleure fixation de la platine support au boîtier, c'est à dire en pratique moins de vibrations de la platine support lorsque le véhicule automobile est en marche.

Alternativement, la platine support peut être réalisée en un autre matériau.

La platine support comprend avantageusement une seconde cavité distincte de la première cavité. La seconde cavité est destinée à recevoir un module optique elliptique.

Alternativement, la seconde cavité peut être destinée à recevoir un autre type de module d'éclairage.

La platine support peut également ne comprendre qu'une seule cavité, c'est à dire la première cavité, ou bien plus de deux cavités.

La première cavité est avantageusement destinée à recevoir un module optique traditionnel. Le module optique traditionnel comprend au moins le réflecteur et la source lumineuse. Le réflecteur est en général à base matériau thermodurcissable (métallisé sur l'une de ses faces), ou en tout autre matériau résistant à la chaleur susceptible d'être créée par la source lumineuse.

Les moyens de montage du réflecteur comprennent avantageusement des moyens de vissage et/ou de collage et/ou de surmoulage et/ou de rivetage ou tout autre moyen mécanique approprié.

Le dispositif support selon la présente invention comprend avantageusement les moyens de fixation. Les moyens de fixation permettent de fixer la source lumineuse de manière amovible.

Les moyens de fixation comprennent avantageusement des moyens de fixation élastique. La présente invention n'est bien entendu pas limitée par la nature des moyens de fixation.

Les moyens de fixation élastique comprennent préférentiellement un ressort. Le ressort comprend avantageusement un fil métallique replié en U. L'attache comprend préférentiellement deux premières pattes et une seconde patte. Chaque première patte comprend un trou dans lequel une extrémité du fil métallique est insérée. Les deux trous définissent un axe de rotation autour duquel le ressort peut pivoter. Une boucle du ressort est destinée à être accrochée de manière amovible à la seconde patte, de telle sorte que le ressort permette de maintenir la source lumineuse fixée lorsque le ressort est accroché à la seconde patte.

La présente invention a également pour objet un dispositif de signalisation et/ou d'éclairage de type projecteur pour un véhicule automobile. Le dispositif de signalisation et/ou d'éclairage comprend le dispositif support selon la présente invention, au moins une source lumineuse, au moins un réflecteur et au moins un module optique elliptique.

La présente invention a également pour objet un véhicule automobile comprenant un dispositif de signalisation et/ou d'éclairage de type projecteur selon la présente invention.

L'invention est décrite ci-après plus en détail à l'aide de figures ne représentant qu'un mode de réalisation préféré et non limitatif de l'invention.

La figure 1 est une vue en perspective d'un exemple de dispositif de signalisation et/ou d'éclairage avant assemblage, selon un mode de réalisation préféré de la présente invention.

La figure 2A est une vue en perspective et en détail de l'exemple de dispositif de signalisation et/ou d'éclairage pendant l'assemblage, selon le mode de réalisation préféré de la présente invention.

La figure 2B est une vue en perspective et en détail de l'exemple de dispositif de signalisation et/ou d'éclairage après l'assemblage, selon le mode de réalisation préféré de la présente invention.

On notera que des éléments ou parties identiques ou similaires ont été désignés par les mêmes signes de référence sur les différentes figures.

Un dispositif de signalisation et/ou d'éclairage 10 selon la présente invention comprend un dispositif support 11. Le dispositif support comprend une platine support 12.

La platine support 12 comprend une première cavité 19 destinée à recevoir une source lumineuse 18, par exemple une lampe de type halogène, une lampe de type xénon, ou une diode électroluminescente, ainsi qu'un réflecteur 21. La platine support 12 comprend à cet effet une attache 14 intégrée, ainsi que des moyens de montage 22.

Dans un mode de réalisation non représenté, la source lumineuse comprend plusieurs diodes électroluminescentes.

L'attache 14 permet d'attacher des moyens de fixation 13 de la source lumineuse. La platine support 12 et l'attache 14 sont moulées d'une seule pièce. La platine support 12 et les moyens de fixation 13 forment le dispositif support 11.

Les moyens de montage 22 permettent de visser le réflecteur 21 sur la platine support 12.

La platine support 12 comprend également une seconde cavité 20 destinée à recevoir un module optique elliptique non représenté.

La platine support 12 comprend également des maintiens 23 de la platine support 12 à un boîtier non représenté du dispositif de signalisation et/ou d'éclairage 10.

La source lumineuse 18, le réflecteur 21 et le dispositif support 11 sont assemblés de manière à former le dispositif de signalisation et/ou d'éclairage 10.

Le réflecteur 21 est vissé sur une face avant de la platine support 12. L'avant et l'arrière relativement à la platine support 12 sont définis tels que l'attache 14 soit située sur une face arrière de la platine support.

Le réflecteur 21 comprend une ouverture 28.

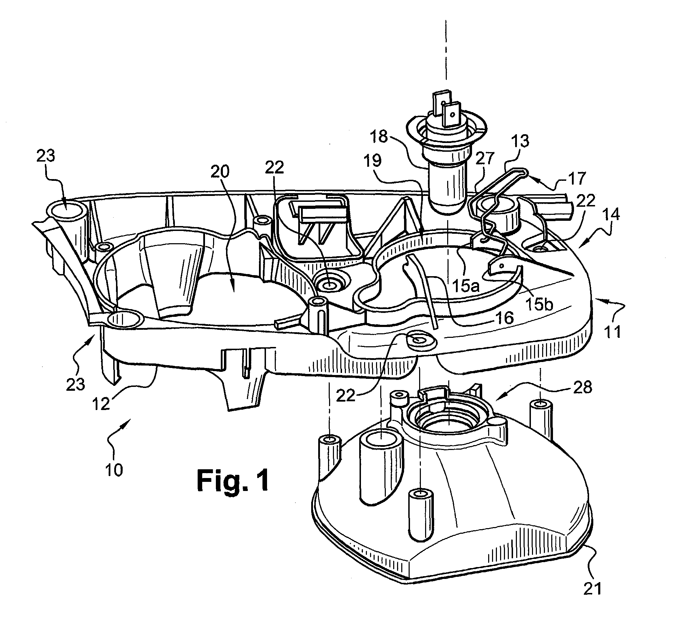

Comme représenté à la figure 1, les moyens de fixation, par exemple un ressort 13, sont positionnés de manière à permettre à la première cavité 19 de recevoir la source lumineuse 18. La source lumineuse 18 est donc introduite dans la première cavité 19 par l'arrière de la platine support 12. La source lumineuse est insérée dans l'ouverture 28 du réflecteur 21.

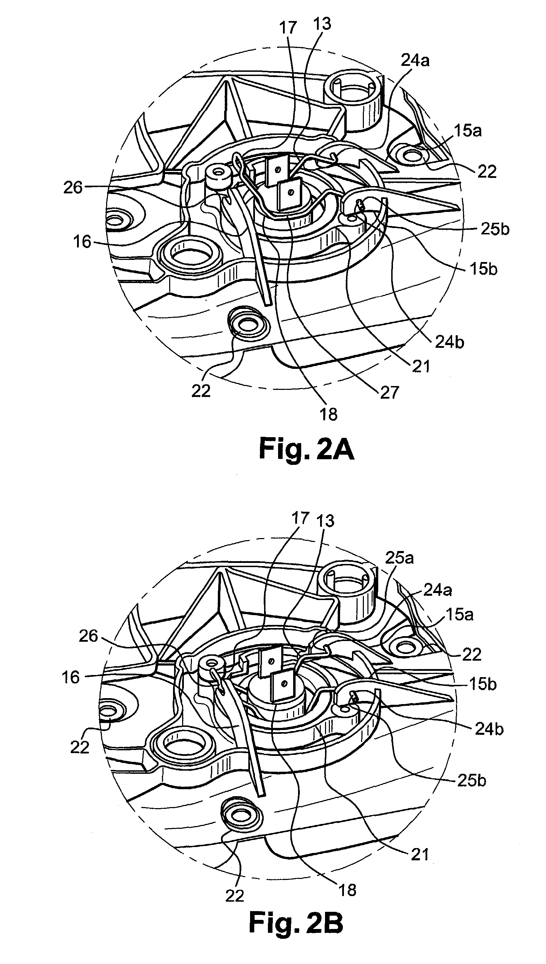

Une fois le réflecteur 21 vissé et la source lumineuse 18 insérée, il reste à fixer la source lumineuse 18, comme représenté plus en détail sur les figures 2A et 2B.

Le ressort 13 comprend typiquement un fil métallique replié en U. Le ressort 13 comprend deux extrémités 25a et 25b du fil métallique, une portion médiane 27, et une boucle 17.

L'attache 14 comprend deux premières pattes 15a et 15b et une seconde patte 16.

Les premières pattes 15a et 15b s'étendent hors d'un plan défini substantiellement par la platine support 12 et sont parallèles entre elles. Chaque première patte 15a et 15b comprend un trou 24a et 24b dans lequel une extrémité 25a et 25b du ressort 13 est insérée. Les deux trous 24a et 24b définissent un axe de rotation autour duquel le ressort 13 peut pivoter.

La seconde patte 16 comprend préférentiellement une fente 26 dans laquelle la boucle 17 du ressort 13 peut être insérée de manière amovible, comme représenté sur la figure 2B. Lorsque la source lumineuse 18 est insérée dans la première cavité 19 de la platine support 12 et que la boucle 17 du ressort 13 est accrochée à la seconde patte 16, la portion médiane 27 exerce une pression sur la source lumineuse 18, la maintenant ainsi fixée.

La source lumineuse 18 peut facilement être remplacée : il suffit de décrocher la boucle 17 du ressort 13 de la seconde patte 16. Le ressort 13 peut alors être pivoté autour de l'axe défini par les trous 24a et 24b des premières pattes 15a et 15b, permettant par là de retirer la source lumineuse 18 de la première cavité 19.

## Revendications

1. Dispositif support (11) d'au moins un module d'éclairage pour un véhicule automobile, comprenant :
- une platine support (12) comprenant au moins une première cavité (19) au droit de laquelle peut être monté un réflecteur grâce à des moyens de montage,
- au moins une source lumineuse (18) pouvant être insérée dans la première cavité,
- la platine support comprenant également une attache (14) intégrée pour des moyens de fixation (13) de la source lumineuse.

2. Dispositif support (11) selon la revendication 1, **caractérisé en ce que** la platine support (12) et l'attache (14) sont moulées d'une seule pièce.

3. Dispositif support (11) selon la revendication 1 ou 2, **caractérisé en ce que** la platine support (12) est en matériau thermoplastique.

4. Dispositif support (11) selon l'une des revendications 1 à 3, **caractérisé en ce que** la platine support (12) comprend une seconde cavité (20) distincte de la première cavité (19), la seconde cavité étant destinée à recevoir un module optique elliptique.

5. Dispositif support (11) selon l'une des revendications 1 à 4, **caractérisé en ce que** les moyens de montage (22) du réflecteur (21) comprennent des moyens de vissage et/ou de collage et/ou de surmoulage et/ou de rivetage.

6. Dispositif support (11) selon l'une des revendications 1 à 5, **caractérisé en ce qu'** il comprend les moyens de fixation (13), les moyens de fixation permettant de fixer la source lumineuse (18) de manière amovible.

7. Dispositif support (11) selon la revendication 6, **caractérisé en ce que** les moyens de fixation comprennent des moyens de fixation élastique.

8. Dispositif support (11) selon la revendication 7,**caractérisé en ce que** les moyens de fixation élastique comprennent un ressort, le ressort comprenant un fil métallique replié en U, et **en ce que** l'attache (14) comprend :
- deux premières pattes (15a, 15b), chaque première patte comprenant un trou (24a, 24b) dans lequel une extrémité (25a, 25b) du fil métallique est insérée, les deux trous définissant un axe de rotation autour duquel le ressort peut pivoter;
- une seconde patte (16), une boucle (17) du ressort étant destinée à être accrochée de manière amovible à la seconde patte, de telle sorte que le ressort permette de maintenir la source lumineuse (18) fixée lorsque le ressort est accroché à la seconde patte.

9. Dispositif de signalisation et/ou d'éclairage (10) de type projecteur pour un véhicule automobile, comprenant
- le dispositif support (11) selon l'une des revendications précédentes,
- au moins une source lumineuse (18),
- au moins un réflecteur (21), et
- au moins un module optique elliptique.

10. Véhicule automobile comprenant un dispositif de signalisation et/ou d'éclairage (10) de type projecteur selon la revendication 9.
